# EUROPEAN PATENT APPLICATION

(11) **EP 4 000 870 A1**
(43) Date of publication of application: **25.05.2022**
(21) Application number: 21202192.7
(22) Date of filing: 12.10.2021
(51) Int. Cl.: B29C 64/20, B29C 64/209, B29C 45/53, B29C 45/58, B29C 64/343, B33Y 30/00, B33Y 50/02, B29C 64/393

(54) **INJECTION MOLDING MACHINE, INJECTION MOLDING APPARATUS, INJECTION MOLDING METHOD AND INJECTION MOLDING PROGRAM**

(30) Priority: 16.11.2020 JP 2020190144
(71) Applicant: TOYOTA JIDOSHA KABUSHIKI KAISHA, Toyota-shi, Aichi-ken 471-8571 (JP)
(72) Inventor: YAMAMOTO, Yasuhiro, Toyota-shi 471-8571 (JP)
(74) Representative: J A Kemp LLP

(57) **Abstract**

An injection molding machine capable of continuously injecting a molten resin is provided. An injection molding machine (2) according to one aspect of the present disclosure is an injection molding machine that injects a molten resin (R) by causing a piston to be slid inside a cylinder, the injection molding machine including: a plurality of cylinders configured to accommodate the molten resin (R); a plurality of pistons configured to be slid inside the respective cylinders and extrude the molten resin inside the respective cylinders; a plurality of drive parts configured to drive the respective pistons; an injection part (18) configured to inject the molten resin (R) extruded from the plurality of cylinders; and a controller configured to control the plurality of drive parts. The controller controls the plurality of drive parts in such a way that a period during which the molten resin (R) is injected from at least a first cylinder (11) of the plurality of cylinders overlaps a period during which the molten resin (R) is injected from a second cylinder (12) of the plurality of cylinders for a preset period and the molten resin is continuously injected from the plurality of cylinders.

## Description

### BACKGROUND

The present disclosure relates to an injection molding machine, an injection molding apparatus, an injection molding method, and an injection molding program, and relates to, for example, an injection molding machine, an injection molding apparatus, an injection molding method, and an injection molding program for injecting a molten resin by causing a piston to be slid inside a cylinder.

An injection molding apparatus disclosed in Japanese Unexamined Patent Application Publication No. 2017-132039 includes a barrel having an end part in which an outlet is formed, a hopper connected to the barrel, a torpedo that is slid in the barrel, and a plunger that is arranged on a side of an open port of the barrel and opens and closes a connection port of the barrel and the hopper.

When a molten resin is injected using the above injection molding apparatus, first, the plunger is moved toward a side of the open port of the barrel, the connection port of the barrel and the hopper is opened, and a resin material is supplied to a space in the barrel on a side of the plunger with respect to the torpedo.

Next, the plunger is moved toward the outlet of the barrel, the connection port of the barrel and the hopper is closed, and the torpedo is moved toward the open port of the barrel in the barrel. At this time, the resin material passes through groove parts of the torpedo, the resin material is plasticized to become a molten resin, and this molten resin flows into the space in the barrel on the side of the outlet with respect to the torpedo.

Next, the torpedo is made to move toward the outlet of the barrel and the molten resin is injected from the outlet. After that, the aforementioned flow is repeated, whereby the supply of the resin material and the injection of the molten resin are repeated.

### SUMMARY

Applicant has found the following problem. The injection molding apparatus according to Japanese Unexamined Patent Application Publication No. 2017-132039 does not have a structure capable of continuously injecting the molten resin.

The present disclosure has been made in view of the aforementioned problem and provides an injection molding machine, an injection molding apparatus, an injection molding method, and an injection molding program capable of continuously injecting a molten resin.

An injection molding machine according to one aspect of the present disclosure is an injection molding machine configured to inject a molten resin by causing a piston to be slid inside a cylinder, the injection molding machine including:
a plurality of cylinders configured to accommodate a molten resin;
a plurality of pistons configured to be slid inside the respective cylinders and extrude the molten resin inside the respective cylinders;
a plurality of drive parts configured to drive the respective pistons;
an injection part configured to inject the molten resin extruded from the plurality of cylinders; and
a controller configured to control the plurality of drive parts,
in which the controller controls the plurality of drive parts in such a way that a period during which the molten resin is injected from at least a first cylinder of the plurality of cylinders overlaps a period during which the molten resin is injected from a second cylinder of the plurality of cylinders for a preset period and the molten resin is continuously injected from the plurality of cylinders.

In the aforementioned injection molding machine,
the piston may be a torpedo piston having an outer circumferential surface on which a groove part is formed,
the cylinder may include a blocking part that blocks an end part of the cylinder which is on a side of the cylinder opposite to the side of the cylinder close to the injection part, a side wall part that is continuous with the blocking part, and an open port that is formed in an end part of the cylinder on the side of the cylinder close to the injection part and is covered with the injection part, and
in a state in which a resin material is supplied to a space of the cylinder which is on the side of the cylinder opposite to the side of the cylinder close to the injection part with the piston interposed therebetween, the piston may be slid toward the side of the cylinder opposite to the side of the cylinder close to the injection part inside the cylinder, the resin material may be made to pass through the groove part of the piston while the resin material is compressed in the space, and the resin material may then be plasticized to become a molten resin.

In the aforementioned injection molding machine, an exhaust notch groove may be formed on a surface of the piston on a side of the piston close to the injection part in such a way that the exhaust notch groove is continuous with the groove part.

In the aforementioned injection molding machine,
the cylinder may include a supply hole through which a resin material is supplied to the space, and
the supply hole may be formed in a side wall part of the cylinder.

An injection molding apparatus according to one aspect of the present disclosure includes:
the aforementioned injection molding machine;
a supply part configured to supply a resin material to a space of the cylinder which is on a side of the cylinder opposite to the side of the cylinder close to the injection part with the piston interposed therebetween, in which
the supply part includes:
   an exhaust part configured to discharge gas from the space;
   a hopper that is connected to the space and accommodates the resin material; and
   a pressurizing part configured to pressurize inside the hopper, and
the resin material is supplied to the space by pressurization inside the hopper while gas is being discharged from the space via the exhaust part.

In the aforementioned injection molding apparatus,
the drive part may include:
a motor;
a screw shaft connected to the motor in such a way that a drive force can be transmitted to the motor;
a slider that moves along the screw shaft;
a case having a closed space that accommodates the screw shaft and the slider, an end part of the cylinder which is on a side of the cylinder opposite to a side of the cylinder close to the injection part being fixed to the case; and
a rod having one end part fixed to the piston and another end part fixed to the slider in a state in which the rod is made to pass through the case and the cylinder,
the exhaust part may include:
   an exhaust path that passes inside the rod and is extended in a direction in which the rod is extended;
   an exhaust hole that is formed in the case; and
   an exhaust valve that is connected to the exhaust hole;
one end part of the exhaust path may reach one end part of the rod and is arranged inside the case, and another end part of the exhaust path may reach the other end part of the rod and is arranged in the space, and
the supply part may supply the resin material to the space by opening the exhaust valve and causing the pressure inside the case and the space to be decreased.

The aforementioned injection molding apparatus may include:
a heating part that is arranged in the injection part; and
a detection part configured to detect the temperature of the molten resin,
in which the controller controls the heating part in such a way that the temperature of the molten resin falls within a preset range.

In the aforementioned injection molding apparatus,
an end part of the cylinder which is on a side of the cylinder opposite to the side of the cylinder close to the injection part is fixed to the drive part, and
a cooling part is arranged between the drive part and the cylinder.

An injection molding method according to one aspect of the present disclosure is an injection molding method for injecting a molten resin by causing a piston to be slid inside a cylinder, the method including:
causing respective pistons to be slid inside a plurality of respective cylinders, causing a period during which a molten resin is injected from at least a first cylinder of the plurality of cylinders to overlap a period during which a molten resin is injected from a second cylinder of the plurality of cylinders for a first preset period, and causing the molten resin to be continuously injected from the plurality of cylinders.

The aforementioned injection molding method may include:
causing the piston to be slid in one direction using a torpedo piston as the piston, thereby plasticizing a resin material to obtain a molten resin, and causing the piston to be slid in another direction, thereby injecting the molten resin; and
causing, in each of the cylinders, a period for injecting the molten resin to overlap a period for supplying the resin material to the cylinder for a second preset period.

In the aforementioned injection molding method, a standby period may be set between the time when the injection of the molten resin is ended and the time when the plasticization of the resin material is started, the standby period being set in accordance with a target injection amount of the molten resin.

In the aforementioned injection molding method, an exhaust period for exhausting gas that enters a space between the molten resin and the piston may be set before the injection of the molten resin is started.

An injection molding program according to one aspect of the present disclosure is an injection molding program configured to inject a molten resin by causing a piston to be slid inside a cylinder,
in which the program causes a computer to execute processing for controlling a plurality of drive parts that drive respective pistons so as to cause the respective pistons to be slid inside a plurality of respective cylinders, cause a period during which a molten resin is injected from at least a first cylinder of the plurality of cylinders to overlap a period during which a molten resin is injected from a second cylinder of the plurality of cylinders for a preset period, and continuously inject the molten resin from the plurality of cylinders.

According to the present disclosure, it is possible to provide an injection molding machine, an injection molding apparatus, an injection molding method, and an injection molding program capable of continuously injecting a molten resin.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 is a diagram schematically showing an injection molding apparatus according to a first embodiment;
Fig. 2 is a block diagram of a control system of the injection molding apparatus according to the first embodiment;
Fig. 3 is an enlarged diagram showing a part of an injection molding machine on a Z-axis negative side according to the first embodiment;
Fig. 4 is a cross-sectional view taken along the line IV-IV of Fig. 3;
Fig. 5 is a cross-sectional view taken along the line V-V of Fig. 3;
Fig. 6 is a cross-sectional view taken along the line VI-VI of Fig. 3;
Fig. 7 is a diagram showing an operation of the injection molding machine according to the first embodiment;
Fig. 8 is a diagram showing an operation of the injection molding machine according to the first embodiment;
Fig. 9 is a diagram showing an operation of the injection molding machine according to the first embodiment;
Fig. 10 is a diagram showing an operation of the injection molding machine according to the first embodiment;
Fig. 11 is a diagram showing an operation of the injection molding machine according to the first embodiment;
Fig. 12 is a diagram showing an operation of the injection molding machine according to the first embodiment;
Fig. 13 is a diagram showing an operation of the injection molding machine according to the first embodiment;
Fig. 14 is a diagram showing an operation of the injection molding machine according to the first embodiment;
Fig. 15 is a diagram showing an operation of the injection molding machine according to the first embodiment;
Fig. 16 is a diagram showing an operation of the injection molding machine according to the first embodiment;
Fig. 17 is a diagram showing a time relation between plasticization of a resin material and injection of a molten resin in first and second cylinders, and a timing when the resin material is supplied;
Fig. 18 is a diagram showing a relation among shaft speeds of a rod of a first drive part and a rod of a second drive part, an injection amount of the molten resin, and time;
Fig. 19 is a diagram for describing operations of a first piston and a second piston; and
Fig. 20 is a block diagram of a control system of an injection molding apparatus according to a third embodiment.

### DESCRIPTION OF EMBODIMENTS

Hereinafter, with reference to the drawings, specific embodiments to which the present disclosure is applied will be described in detail. However, the present disclosure is not limited to the following embodiments. Further, for the sake of clarification of the description, the following descriptions and the drawings are simplified as appropriate.

### <First Embodiment>

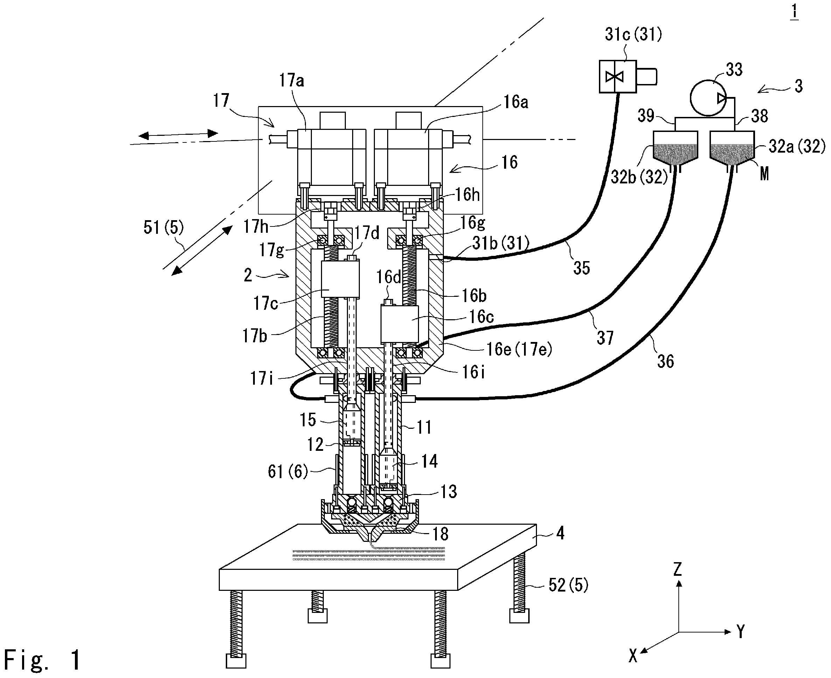

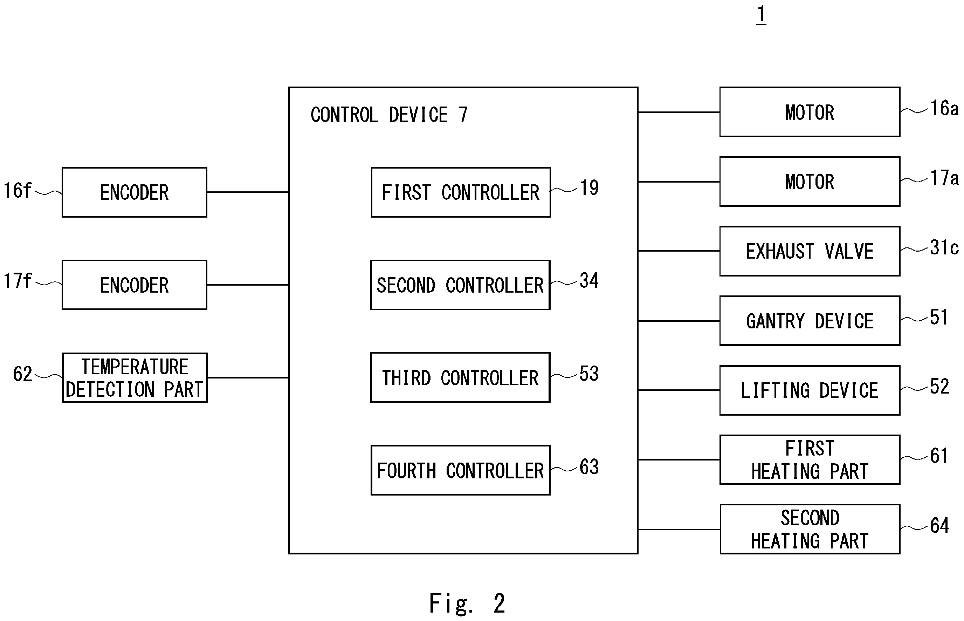

First, a structure of an injection molding apparatus according to this embodiment will be described. The injection molding apparatus according to this embodiment is suitable for additively manufacturing a workpiece using an injection molding machine. Fig. 1 is a diagram schematically showing an injection molding apparatus according to this embodiment. Fig. 2 is a block diagram of a control system of the injection molding apparatus according to this embodiment. The following description will be given using a three-dimensional (XYZ) coordinate system for the sake of clarity of the description.

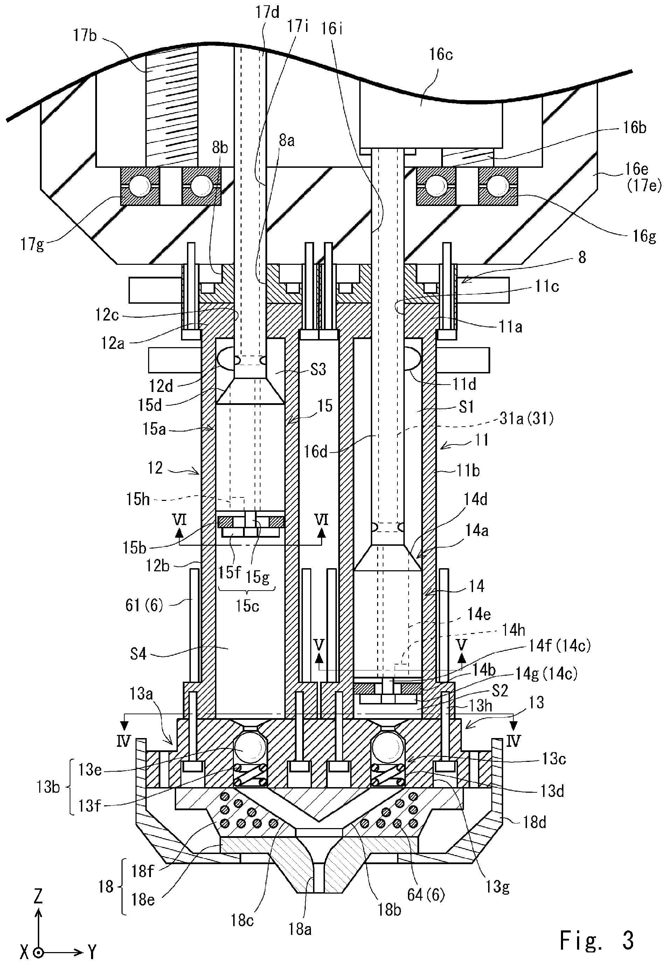

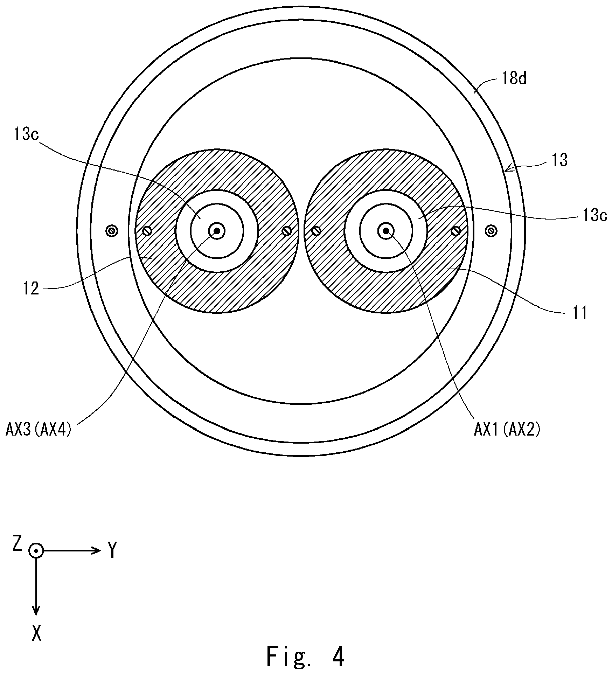

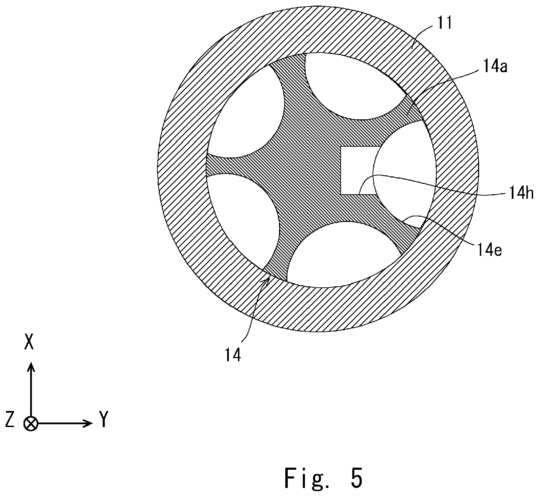

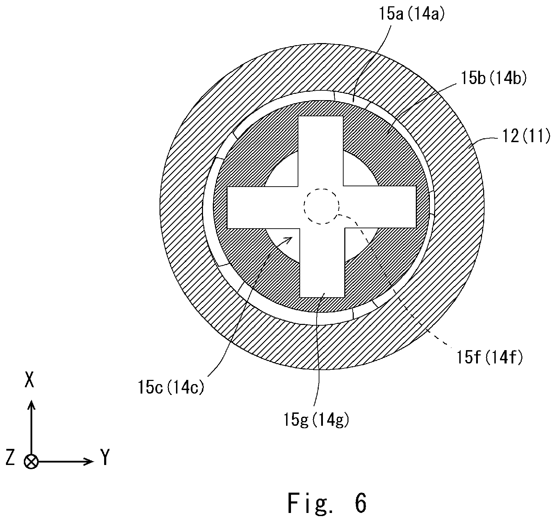

As shown in Figs. 1 and 2, an injection molding apparatus 1 includes an injection molding machine 2, a supply apparatus 3, a table 4, a moving device 5, a heating device 6, and a control device 7. The injection molding machine 2 has, for example, a structure capable of continuously injecting a molten resin. Fig. 3 is an enlarged diagram showing a part of the injection molding machine on a Z-axis negative side according to this embodiment. Fig. 4 is a cross-sectional view taken along the line IV-IV of Fig. 3. Fig. 5 is a cross-sectional view taken along the line V-V of Fig. 3. Fig. 6 is a cross-sectional view taken along the line VI-VI of Fig. 3.

As shown in Figs. 1 to 3, the injection molding machine 2 includes a first cylinder 11, a second cylinder 12, an end plate 13, a first piston 14, a second piston 15, a first drive part 16, a second drive part 17, an injection part 18, and a first controller 19.

As shown in Fig. 3, the first cylinder 11 is extended in the Z-axis direction and has, as its basic form, a topped cylindrical shape in which the end part of the first cylinder 11 on the Z-axis positive side is blocked. That is, the first cylinder 11 includes a blocking part 11a arranged on the Z-axis positive side thereof and a cylindrical side wall part 11b that is continuous with the peripheral part of the blocking part 11a and is extended in the Z-axis negative side from the blocking part 11a, and the end part of the first cylinder 11 on the Z-axis negative side is opened.

A through-hole 11c that penetrates through the blocking part 11a in the Z-axis direction is formed in the blocking part 11a of the first cylinder 11. Further, a supply hole 11d through which a resin material M is supplied is formed in a part of the side wall part 11b of the first cylinder 11 on the Z-axis positive side.

As shown in Fig. 3, the second cylinder 12 is extended in the Z-axis direction and is aligned with the first cylinder 11 in the Y-axis direction. Since the second cylinder 12 has a structure equal to that of the first cylinder 11, the redundant descriptions thereof will be omitted. The second cylinder 12 includes a blocking part 12a including a through-hole 12c and a side wall part 12b including a supply hole 12d, and the end part of the second cylinder 12 on the Z-axis negative side is opened.

As shown in Fig. 3, the end plate 13 is fixed to the end part of each of the first cylinder 11 and the second cylinder 12 on the Z-axis negative side. The end plate 13 includes a body part 13a and a non-return valve 13b. The body part 13a has, for example, a plate shape as its basic form, and includes through-holes 13c at intervals therebetween in the Y-axis direction.

The through-holes 13c penetrate through the body part 13a in the Z-axis direction, and each include an accommodation part 13d that accommodates the non-return valve 13b in a part of the through-hole 13c on the Z-axis negative side. The surface of the accommodation part 13d on the Z-axis positive side is an inclined surface that is inclined in the Z-axis negative side from the center of the through-hole 13c toward the outside thereof.

Note that the part of the through-hole 13c on the Z-axis positive side may include an inclined surface that is inclined in the Z-axis positive side from the center of the through-hole 13c toward the outside thereof, and the end part of the inclined surface on the Z-axis negative side may be continuous with the end part of the accommodation part 13d on the Z-axis positive side.

The non-return valve 13b allows a molten resin to flow toward the Z-axis negative side and interrupts the flow of the molten resin toward the Z-axis positive side. The non-return valve 13b may be formed of, for example, a check valve, and includes a check ball 13e and a spring 13f. An elastic force of the spring 13f may be set as appropriate in such a way that the non-return valve 13b is opened when a preset pressure is acted on the check ball 13e.

The above end plate 13 is fixed to the end part of each of the first cylinder 11 and the second cylinder 12 on the Z-axis negative side via bolts 13h that are made to pass through bolt holes 13g formed in the body part 13a so as to cover an open port of the first cylinder 11 on the Z-axis negative side and an open port of the second cylinder 12 on the Z-axis negative side in the end plate 13.

Note that the through-hole 13c on the Y-axis negative side in the end plate 13 is arranged on the Z-axis negative side with respect to the first cylinder 11 and the through-hole 13c on the Y-axis positive side in the end plate 13 is arranged on the Z-axis negative side with respect to the second cylinder 12.

Preferably, as shown in Fig. 4, a central axis AX1 of the through-hole 13c on the Y-axis positive side in the end plate 13 may substantially overlap a central axis AX2 of the first cylinder 11 and a central axis AX3 of the through-hole 13c on the Y-axis negative side in the end plate 13 may substantially overlap a central axis AX4 of the second cylinder 12.

The first piston 14 is arranged inside the first cylinder 11 in such a way that the first piston 14 can be slid inside the first cylinder 11. As shown in Fig. 3, the first piston 14, which includes a body part 14a, a non-return ring 14b, and a stopper 14c, is formed, for example, as a torpedo piston

The body part 14a has, as its basic form, a pillar shape having an outer shape that corresponds to the inner shape of the first cylinder 11. At this time, a surface 14d of the body part 14a on the Z-axis positive side is preferably an inclined surface that is inclined toward the Z-axis negative side from the center of the body part 14a toward the peripheral part thereof.

As shown in Fig. 5, groove parts 14e are formed on a peripheral surface of the body part 14a. The groove parts 14e, which are extended in the Z-axis direction, are arranged at approximately equal intervals in the circumferential direction of the body part 14a. As will be described later, the groove parts 14e may have such a shape and an arrangement that it is possible to plasticize, when the resin material M supplied to a first space S1 in the first cylinder 11 on the Z-axis positive side with respect to the first piston 14 passes through the groove parts 14e, the resin material M to obtain a molten resin, thereby allowing the molten resin to flow into a second space S2 in the first cylinder 11 on the Z-axis negative side with respect to the first piston 14.

A description will be given with reference to Fig. 6. The non-return ring 14b, which has a ring shape having an outer shape that corresponds to the inner shape of the first cylinder 11, is arranged on the Z-axis negative side with respect to the body part 14a. The stopper 14c holds the non-return ring 14b in the end part of the body part 14a on the Z-axis negative side.

The stopper 14c includes, for example, a pillar part 14f protruding from the end part of the body part 14a on the Z-axis negative side and a branch part 14g that is branched radially about the pillar part 14f from the end part of the pillar part 14f on the Z-axis negative side.

In a state in which the pillar part 14f is made to pass through the through-hole of the non-return ring 14b, the non-return ring 14b is arranged between the end part of the body part 14a on the Z-axis negative side and the branch part 14g. At this time, the length of the pillar part 14f in the Z-axis direction is larger than the thickness of the non-return ring 14b in the Z-axis direction in such a way that the non-return ring 14b can move in the Z-axis direction.

As shown in Fig. 5, an exhaust notch groove 14h is preferably formed in the end part of the body part 14a on the Z-axis negative side, while the detailed functions thereof will be described later. When the first piston 14 is seen from the Z-axis negative side, one end part of the exhaust notch groove 14h may reach the end part of the groove parts 14e on the Z-axis negative side and the other end part of the exhaust notch groove 14h may reach the through-hole of the non-return ring 14b.

As shown in Fig. 3, the second piston 15 is arranged inside the second cylinder 12 in such a way that the second piston 15 can be slid inside the second cylinder 12. The second piston 15 has a structure the same as that of the first piston 14.

Therefore, the second piston 15 includes a body part 15a having an inclined surface on a surface 15d on the Z-axis positive side, a non-return ring 15b, and a stopper 15c including a pillar part 15f and a branch part 15g, while the redundant descriptions will be omitted. The second piston 15 preferably includes an exhaust notch groove 15h.

The first drive part 16 drives the first piston 14 in the Z-axis direction. As shown in Fig. 1, the first drive part 16 includes a motor 16a, a screw shaft 16b, a slider 16c, a rod 16d, and a case 16e. The motor 16a, which is, for example, a servo motor, is fixed to the end part of the case 16e on the Z-axis positive side. The rotation angle of the output shaft of the motor 16a is detected by an encoder 16f (see Fig. 2).

The screw shaft 16b is extended in the Z-axis direction and is rotatably supported via a bearing 16g inside the case 16e. Then, the end part of the screw shaft 16b on the Z-axis positive side is connected to the output shaft of the motor 16a so as to be able to transmit a drive force from the output shaft of the motor 16a in a state in which the end part of the screw shaft 16b on the Z-axis positive side is made to pass through a through-hole 16h formed in the end part of the case 16e on the Z-axis positive side.

The slider 16c includes a screw hole and the screw hole of the slider 16c is engaged with the screw shaft 16b in such a way that the slider 16c moves along the screw shaft 16b inside the case 16e. The screw shaft 16b and the slider 16c form a ball screw and are accommodated inside the case 16e.

The rod 16d is extended in the Z-axis direction, and is made to pass through a through-hole 16i formed in the end part of the case 16e on the Z-axis negative side and the through-hole 11c of the first cylinder 11. The end part of the rod 16d on the Z-axis positive side is fixed to the slider 16c and the end part of the rod 16d on the Z-axis negative side is fixed to the end part of the first piston 14 on the Z-axis positive side.

The case 16e supports the motor 16a, the screw shaft 16b, the slider 16c, and the rod 16d. The case 16e has, for example, a box shape, and forms a closed space inside the case 16e. The blocking part 11a of the first cylinder 11 is fixed to the end part of the case 16e on the Z-axis negative side.

The second drive part 17 drives the second piston 15 in the Z-axis direction. Since the second drive part 17 has a structure substantially equal to that of the first drive part 16, the redundant descriptions thereof will be omitted. As shown in Fig. 1, the second drive part 17 includes a motor 17a, a screw shaft 17b, a slider 17c, a rod 17d, and a case 17e.

That is, the motor 17a is fixed to the end part of the case 17e on the Z-axis positive side, and the rotation angle of the output shaft of the motor 17a is detected by an encoder 17f (see Fig. 2). The screw shaft 17b is supported inside the case 17e via a bearing 17g, and the end part of the screw shaft 17b on the Z-axis positive side is connected to the output shaft of the motor 17a in a state in which the screw shaft 17b is made to pass through a through-hole 17h formed in the end part of the case 17e on the Z-axis positive side.

The screw hole of the slider 17c is engaged with the screw shaft 17b in such a way that the slider 17c moves along the screw shaft 17b inside the case 17e. The rod 17d is made to pass through a through-hole 17i formed in the end part of the case 17e on the Z-axis negative side and the through-hole 12c of the second cylinder 12. Then, the end part of the rod 17d on the Z-axis positive side is fixed to the slider 17c, and the end part of the rod 17d on the Z-axis negative side is fixed to the end part of the second piston 15 on the Z-axis positive side.

The case 17e supports the motor 17a, the screw shaft 17b, the slider 17c, and the rod 17d, and forms a closed space inside the case 17e. Then the blocking part 12a of the second cylinder 12 is fixed to the end part of the case 17e on the Z-axis negative side.

As shown in Fig. 1, in this embodiment, the case 17e is integrally formed with the case 16e of the first drive part 16, thereby forming a common closed space. Therefore, in the following description, when the case 16e of the first drive part 16 is indicated, the case 17e of the second drive part 17 may be indicated as well. Note that the case 17e may be formed of a member that is different from that of the case 16e of the first drive part 16.

The injection part 18 is arranged on the Z-axis negative side with respect to the end plate 13 in such a way that the injection part 18 is able to inject the molten resin extruded from the first cylinder 11 and the second cylinder 12. The injection part 18 includes an outlet 18a that injects the molten resin, a first branch path 18b that is extended in the Z-axis positive side and the Y-axis positive side from the outlet 18a, and a second branch part 18c that is extended in the Z-axis positive side and the Y-axis negative side from the outlet 18a.

The injection part 18 is fixed to the end plate 13 via retaining nuts 18d. At this time, as shown in Fig. 3, the end part of the first branch path 18b on the Z-axis positive side communicates with the through-hole 13c in the end plate 13 on the Y-axis positive side, and the end part of the second branch path 18c on the Z-axis positive side communicates with the through-hole 13c in the end plate 13 on the Y-axis negative side.

The injection part 18 is divided into a first plate 18e where the outlet 18a is formed and a second plate 18f where the first branch path 18b and the second branch path 18c are formed. While the detailed functions thereof will be described later, the second plate 18f is preferably formed of a ceramic plate.

While the details of the first controller 19 will be described later, the first controller 19 controls the motor 16a of the first drive part 16 and the motor 17a of the second drive part 17 based on the results of detection in the encoders 16f and 17f.

The supply apparatus 3 supplies the resin material M to the first cylinder 11 and the second cylinder 12. As shown in Figs. 1 and 2, the supply apparatus 3 includes an exhaust part 31, a hopper 32, a pressurizing part 33, and a second controller 34. The exhaust part 31 discharges gas from the first space S1 of the first cylinder 11 and a first space S3 of the second cylinder 12 on the Z-axis positive side with respect to the second piston 15.

More specifically, the exhaust part 31 includes an exhaust path 31a, an exhaust hole 31b, and an exhaust valve 31c. As shown in Figs. 1 and 3, the exhaust path 31a is formed in each of the rod 16d of the first drive part 16 and the rod 17d of the second drive part 17. The exhaust paths 31a pass inside the respective rods 16d and 17d and are extended in the Z-axis direction.

The end parts of the exhaust paths 31a on the Z-axis negative side reach the peripheral surfaces of the end parts of the respective rods 16d and 17d on the Z-axis negative side and the end parts of the exhaust paths 31a on the Z-axis positive side reach the end surfaces of the respective rods 16d and 17d on the Z-axis positive side.

Therefore, the end parts of the exhaust paths 31a on the Z-axis negative side are arranged in the first space S1 of the first cylinder 11 or the first space S3 of the second cylinder 12 and the end parts of the exhaust paths 31a on the Z-axis positive side are arranged inside the case 16e of the first drive part 16.

The exhaust hole 31b is formed in the case 16e of the first drive part 16. However, when the case 16e of the first drive part 16 and the case 17e of the second drive part 17 are made of members different from each other, the exhaust hole 31b is formed in each of the cases 16e and 17e. The exhaust valve 31c is connected to the exhaust hole 31b via an exhaust pipe 35. The exhaust valve 31c is, for example, a magnetic valve.

The hopper 32 accommodates the resin material M to be supplied to the first space S1 of the first cylinder 11 and the first space S3 of the second cylinder 12. In this embodiment, a first hopper 32a and a second hopper 32b are provided as the hopper 32.

The first hopper 32a, which has a structure capable of sealing inside the first hopper 32a, is connected to the supply hole 11d of the first cylinder 11 via a first supply pipe 36. The second hopper 32b, which has a structure capable of sealing inside the second hopper 32b, is connected to the supply hole 12d of the second cylinder 12 via a second supply pipe 37.

The first hopper 32a and the second hopper 32b may each have a structure in which the resin material M can be kept dry by a pre-heater. Accordingly, it is possible to prevent molding defects caused by water vapor that is generated when the resin material M is plasticized.

Further, the inner diameters of the supply hole 11d of the first cylinder 11, the supply hole 12d of the second cylinder 12, the first supply pipe 36, and the second supply pipe 37 may be equal to or less than twice the diagonal of a resin pellet, which is the resin material M.

Accordingly, it is possible to prevent the resin material M from lining up and bridging in the supply hole 11d of the first cylinder 11, the supply hole 12d of the second cylinder 12, the first supply pipe 36 and the second supply pipe 37 and to prevent the inside thereof from being blocked.

The pressurizing part 33 is an air pump that pressurizes the inside of the hopper 32 with gas. In this embodiment, the pressurizing part 33 is connected to the first hopper 32a via a first connecting pipe 38 and is also connected to the second hopper 32b via a second connecting pipe 39.

For example, the pressurizing part 33 constantly pressurizes inside the hopper 32. Therefore, in a state in which the exhaust valve 31c and the non-return valve 13b are closed, a closed space formed of the first cylinder 11, the second cylinder 12, and the case 16e of the first drive part 16 is maintained to have a pressure higher than that in the outside of the case 16e.

The second controller 34 controls the exhaust valve 31c in order to discharge gas from the first space S1 of the first cylinder 11 or the first space S3 of the second cylinder 12 at a desired timing that will be described later.

The table 4 is a molding table that is arranged on the Z-axis negative side with respect to the injection molding machine 2 and is used for laminating the molten resin injected from the injection molding machine 2 to mold a workpiece. The table 4 may be, for example, configured to be heatable. The moving device 5 moves the injection molding machine 2 and the table 4 in order to mold a workpiece. The moving device 5 includes, for example, a gantry device 51, a lifting device 52, and a third controller 53.

The gantry device 51 moves the injection molding machine 2 in the X-axis direction and the Y-axis direction. The gantry device 51 may be a general gantry device, and may be formed, for example, by combining a slide rail that is extended in the X-axis direction with a slide rail that is extended in the Y-axis direction.

The lifting device 52 raises or lowers the table 4 in the Z-axis direction. The lifting device 52, which may be, for example, a general lifting device, may be made of ball screws. The third controller 53 controls the gantry device 51 and the lifting device 52 in order to laminate the molten resin injected from the injection molding machine 2 and mold a desired workpiece.

As shown in Figs. 2 to 3, the heating device 6 includes a first heating part 61, a temperature detection part 62, and a fourth controller 63. The first heating part 61 maintains the temperature of the plasticized molten resin.

The first heating part 61 may be formed of, for example, a seat heater that surrounds a part of the first cylinder 11 and the second cylinder 12 on the Z-axis negative side. Note that it is sufficient that the first heating part 61 be able to heat the plasticized molten resin, and the structure and the arrangement of the first heating part 61 are not limited.

The temperature detection part 62 detects the temperature of the molten resin. The temperature detection part 62 is provided, for example, in the injection part 18. At this time, the temperature detection part 62 may be provided, for example, in the second plate 18f of the injection part 18.

When the second plate 18f is formed of a ceramic plate, as described above, the heat of the molten resin that passes through the injection part 18 is easily conducted to the second plate 18f since the heat capacity of the second plate 18f formed of a ceramic plate is smaller than that of a second plate 18f made of a metal, whereby it is possible to accurately detect the temperature of the molten resin. The fourth controller 63 controls the first heating part 61 in such a way that the temperature of the molten resin falls within a first preset range based on the results of the detection in the temperature detection part 62.

As shown in Fig. 2, the control device 7 includes the first controller 19, the second controller 34, the third controller 53, and the fourth controller 63, and controls the first controller 19, the second controller 34, the third controller 53, and the fourth controller 63 in order to mold a workpiece.

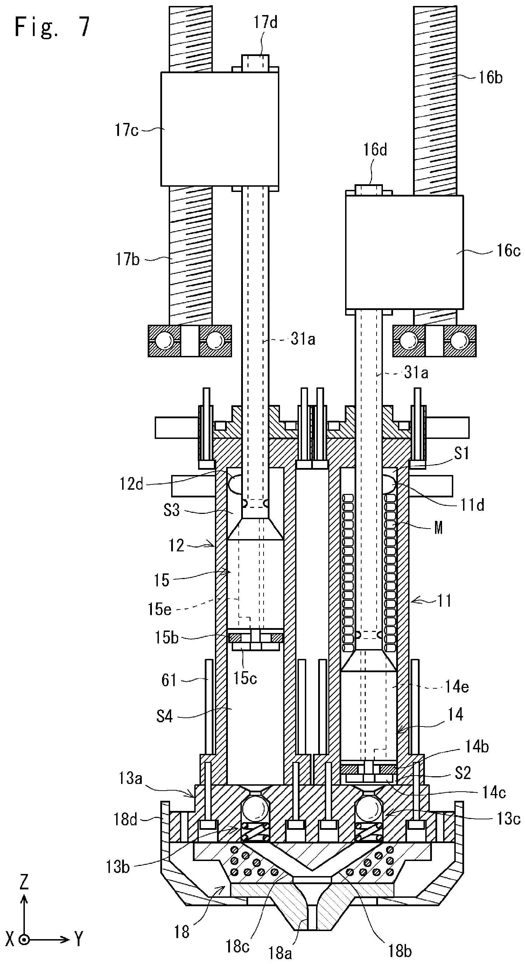

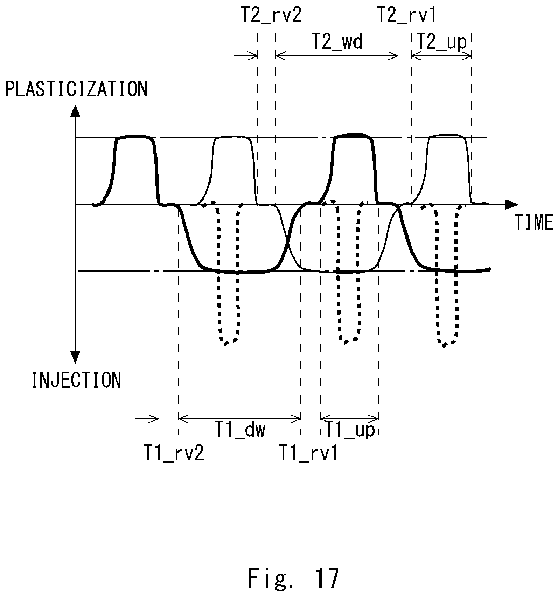

Next, a flow of molding a workpiece using the injection molding apparatus 1 according to this embodiment will be described. Figs. 7 to 16 are diagrams showing operations of the injection molding machine. Fig. 17 is a diagram showing a time relation between plasticization of the resin material and injection of the molten resin in the first and second cylinders, and a timing when the resin material is supplied.

It is assumed that the first piston 14 and the second piston 15 are initially arranged in the farthest place of the Z-axis positive side. From this state, the first controller 19 first controls the motor 16a while referring to the results of the detection in the encoder 16f, to thereby move the first piston 14 toward the Z-axis negative side.

After the first controller 19 confirms that the first piston 14 has reached a preset position in the Z-axis direction by referring to the results of the detection in the encoder 16f, the second controller 34 controls the exhaust valve 31c of the exhaust part 31 to cause the exhaust valve 31c to be opened. At this time, the first controller 19 still does not drive the motor 17a of the second drive part 17.

Accordingly, the gas in the first space S1 of the first cylinder 11 enters the case 16e through the exhaust path 31a of the rod 16d, is discharged via the exhaust hole 31b and the exhaust valve 31c, and the first space S1 of the first cylinder 11 is depressurized. At the same time, the resin material M is pushed by the gas from the first hopper 32a. Then, as shown in Fig. 7, the resin material M is supplied to the first space S1 of the first cylinder 11 via the supply hole 11d of the first cylinder 11.

At this time, since the supply hole 11d is formed in the side wall part 11b of the first cylinder 11, the resin material M falls toward the Z-axis negative side while swirling along with the gas. Therefore, the resin material M can be supplied into the first space S1 of the first cylinder 11 substantially evenly.

Next, after the first controller 19 confirms that the first piston 14 has reached the farthest place of the Z-axis negative side by referring to the results of the detection in the encoder 16f, the second controller 34 controls and closes the exhaust valve 31c of the exhaust part 31. At this time, the first space S1 of the first cylinder 11 is filled with the resin material M.

That is, by just opening the exhaust valve 31c of the exhaust part 31, the resin material M can be automatically supplied to the first space S1 of the first cylinder 11. At this time, the resin material M is supplied to the first space S1 of the first cylinder 11 between the time when the first piston 14 reaches a predetermined position in the Z-axis direction and the time when it reaches the farthest place of the Z-axis negative side, whereby the resin material M can be quantitatively supplied to the first cylinder 11.

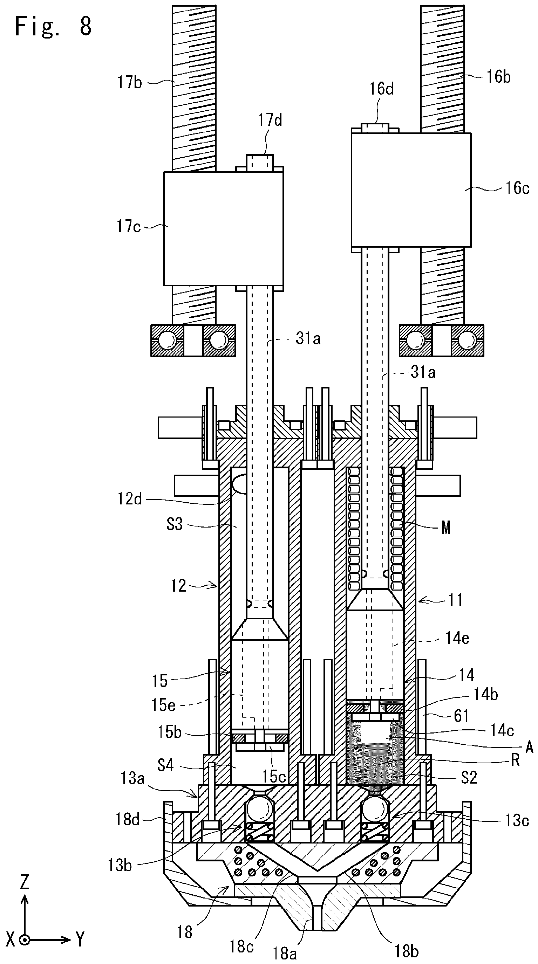

Next, the first controller 19 controls the motor 16a while referring to the results of the detection in the encoder 16f to move the first piston 14 toward the Z-axis positive side as shown in Fig. 8. At the same time, the first controller 19 controls the motor 17a while referring to the results of the detection in the encoder 17f to move the second piston 15 toward the Z-axis negative side.

As the first piston 14 moves toward the Z-axis positive side, the resin material M is compressed by the first piston 14, the blocking part 11a of the first cylinder 11, and the side wall part 11b of the first cylinder 11. Then the resin material M is plasticized while passing through the groove parts 14e of the first piston 14 to be a molten resin R, and this molten resin R flows into the second space S2 of the first cylinder 11. This state is shown as the first top of the thick line in Fig. 17.

In Fig. 17, the thick line shows a timing of plasticization of the resin material M and injection of the molten resin R in the first cylinder 11, and the thin line shows a timing of plasticization of the resin material M and injection of the molten resin R in the second cylinder 12. Further, in Fig. 17, the broken line shows a timing when the resin material M is supplied.

At this time, since the supply hole 11d is formed in the side wall part 11b of the first cylinder 11, the resin material M is not likely to be leaked out from the supply hole 11d. Moreover, the force on the Z-axis positive side that is acted when the resin material M is plasticized in the first piston 14 can be received by the blocking part 11a of the first cylinder 11.

Further, when the surface 14d of the first piston 14 on the Z-axis positive side is formed on the inclined surface that is inclined toward the Z-axis negative side from the center of the body part 14a toward the peripheral part thereof, the resin material M can be properly guided to the groove parts 14e of the first piston 14 when the first piston 14 moves toward the Z-axis positive side.

When the first piston 14 moves toward the Z-axis positive side, the non-return ring 14b of the first piston 14 is pushed toward the Z-axis negative side, which allows the molten resin R to properly flow into the second space S2 of the first cylinder 11 from the through-hole of the non-return ring 14b via the gap between the body part 14a and the non-return ring 14b.

On the other hand, after the first controller 19 confirms that the second piston 15 has reached a preset position in the Z-axis direction by referring to the results of the detection in the encoder 17f, the second controller 34 controls the exhaust valve 31c of the exhaust part 31 and opens the exhaust valve 31c.

Accordingly, the gas in the first space S3 of the second cylinder 12 enters the case 16e through the exhaust path 31a of the rod 17d, and is discharged via the exhaust hole 31b and the exhaust valve 31c, which causes the first space S3 of the second cylinder 12 to be depressurized. At the same time, the resin material M is pushed from the second hopper 32b and is supplied to the first space S3 of the second cylinder 12 via the supply hole 12d of the second cylinder 12.

At this time, since the supply hole 12d is formed in the side wall part 12b of the second cylinder 12, the resin material M falls toward the Z-axis negative side while swirling along with the gas. Therefore, the resin material M can be supplied into the first space S3 of the second cylinder 12 substantially evenly.

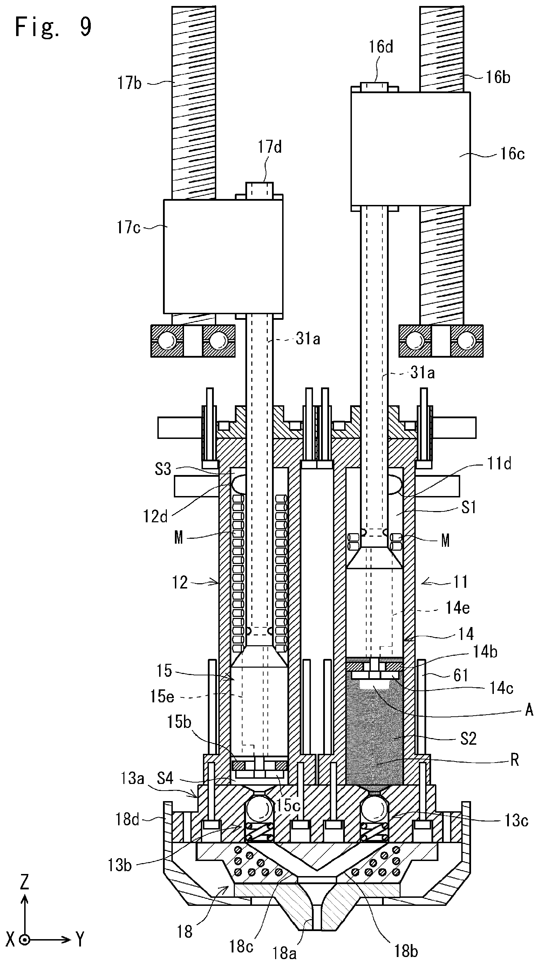

Next, after the first controller 19 confirms that the first piston 14 has reached the farthest place of the Z-axis positive side by referring to the results of the detection in the encoder 16f, the first controller 19 performs inversion control on the motor 16a in order to invert the first piston 14 from the movement toward the Z-axis positive side to the movement toward the Z-axis negative side, and as shown in Fig. 9, causes the first piston 14 to be moved toward the Z-axis negative side.

When the motor 16a is subjected to inversion control as described above, there is a period during which the motor 16a is substantially stopped temporarily. Therefore, the first piston 14 temporarily stops in the farthest place of the Z-axis positive side and then starts moving toward the Z-axis negative side.

When the volume of the resin material M when it is supplied to the first space S1 of the first cylinder 11 is smaller than the volume of the second space S2, the gas A may enter the area of the second space S2 of the first cylinder 11 on the Z-axis positive side. However, this gas A escapes to the first space S1 via the exhaust notch groove 14h and the groove parts 14e of the first piston 14 and is further discharged via the exhaust path 31a of the rod 16d and the exhaust hole 31b and the exhaust valve 31c of the case 16e. Accordingly, it is possible to prevent the gas A from being mixed into the molten resin R, as a result of which defects of workpieces can be prevented.

By making the movement speed of the first piston 14 during a period in which the gas A that has entered the second space S2 of the first cylinder 11 is discharged faster than the movement speed of the first piston 14 when the molten resin R is injected at the target injection amount, the molten resin R can be quickly injected.

Next, after the first controller 19 confirms that the second piston 15 has reached the farthest place of the Z-axis negative side by referring to the results of the detection in the encoder 17f, the first controller 19 performs inversion control on the motor 17a in order to invert the second piston 15 from the movement toward the Z-axis negative side to the movement toward the Z-axis positive side. When the motor 17a is subjected to inversion control as described above, there is a period during which the motor 17a is substantially stopped temporarily. Therefore, the second piston 15 substantially stops in the farthest place of the Z-axis negative side.

At the same time, the second controller 34 controls and closes the exhaust valve 31c of the exhaust part 31. As described above, between the time when the exhaust valve 31c is opened and the time when it is closed, the first space S3 of the second cylinder 12 is filled with the resin material M. That is, by just opening the exhaust valve 31c of the exhaust part 31, the resin material M can be automatically supplied to the first space S3 of the second cylinder 12.

At this time, since the resin material M is supplied to the first space S3 of the second cylinder 12 between the time when the second piston 15 reaches a predetermined position in the Z-axis direction to the time when it reaches the farthest place of the Z-axis negative side, the resin material M can be quantitatively supplied to the second cylinder 12.

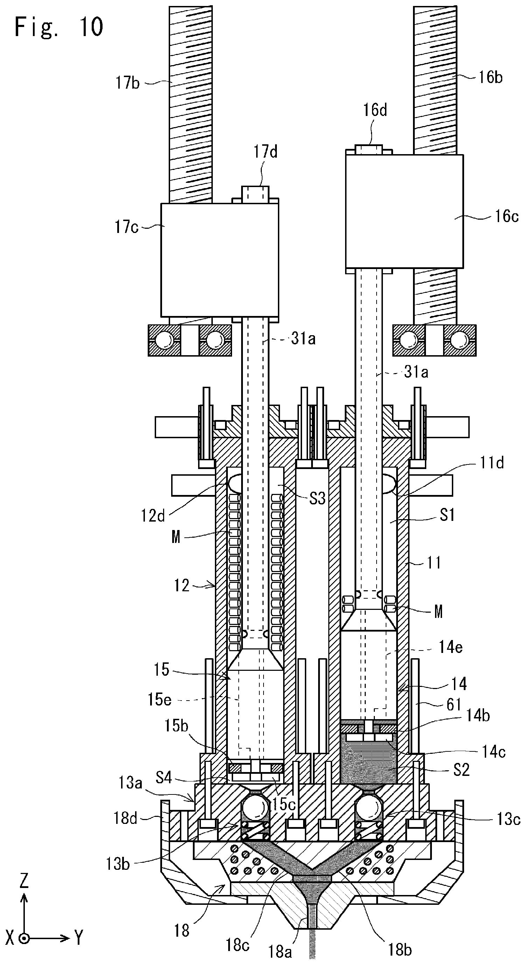

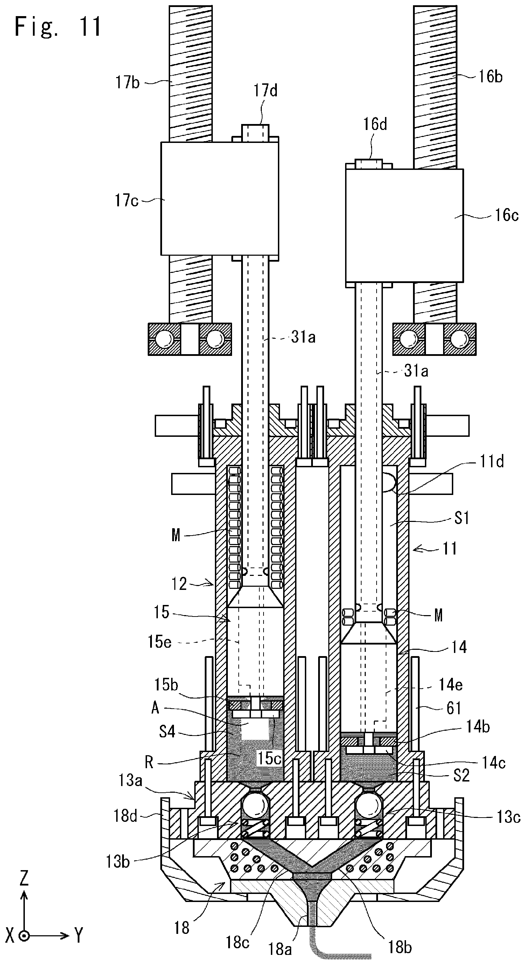

Next, when the first controller 19 further moves the first piston 14 toward the Z-axis negative side by controlling the motor 16a, as shown in Figs. 10 and 11, the molten resin R is injected via the through-hole 13c on the Y-axis positive side and the first branch path 18b and the outlet 18a of the injection part 18 while pushing the non-return valve 13b of the end plate 13 on the Y-axis positive side toward the Z-axis negative side. At this time, the non-return valve 13b on the Y-axis negative side interrupts the flow of the molten resin R toward the Z-axis positive side by the pressure caused by the molten resin R. This state is shown as the first valley of the thick line in Fig. 17.

When the first piston 14 moves toward the Z-axis negative side, the non-return ring 14b of the first piston 14 is pushed toward the Z-axis positive side and the groove parts 14e of the body part 14a are blocked by the non-return ring 14b, whereby it is possible to prevent the molten resin R from flowing back into the first space S1 of the first cylinder 11 via the groove parts 14e of the body part 14a.

On the other hand, as shown in Fig. 11, when the movement of the second piston 15 toward the Z-axis positive side is started, the resin material M is compressed by the second piston 15, the blocking part 12a of the second cylinder 12, and the side wall part 12b of the second cylinder 12, the resin material M is plasticized while passing through the groove parts 15e of the second piston 15 to become a molten resin R, and this molten resin R flows into a second space S4 of the second cylinder 12 on the Z-axis negative side with respect to the second piston 15. This state is shown as the first top of the thin line in Fig. 17.

At this time, the supply hole 12d is formed in the side wall part 12b of the second cylinder 12, and thus the resin material M is not likely to be leaked out from the supply hole 12d. Moreover, the force on the Z-axis positive side that is acted when the resin material M is plasticized in the second piston 15 can be received by the blocking part 12a of the second cylinder 12.

Further, when the surface 15d of the second piston 15 on the Z-axis positive side is formed on the inclined surface that is inclined toward the Z-axis negative side from the center of the body part 15a toward the peripheral part thereof, the resin material M can be properly guided to the groove parts 15e of the second piston 15 when the second piston 15 moves toward the Z-axis positive side.

When the second piston 15 moves toward the Z-axis positive side as described above, the non-return ring 15b of the second piston 15 is pushed toward the Z-axis negative side, which allows the molten resin R to properly flow into the second space S4 of the second cylinder 12 from the through-hole of the non-return ring 15b via the gap between the body part 15a and the non-return ring 15b.

After the first controller 19 confirms that the first piston 14 has reached a preset position in the Z-axis direction as shown in Fig. 11 by referring to the results of the detection in the encoder 16f, the first controller 19 controls and opens the exhaust valve 31c of the exhaust part 31. Accordingly, the gas in the first space S1 of the first cylinder 11 is discharged and the resin material M is supplied to the first space S1 of the first cylinder 11. This state is shown as the first valley of the broken line in Fig. 17.

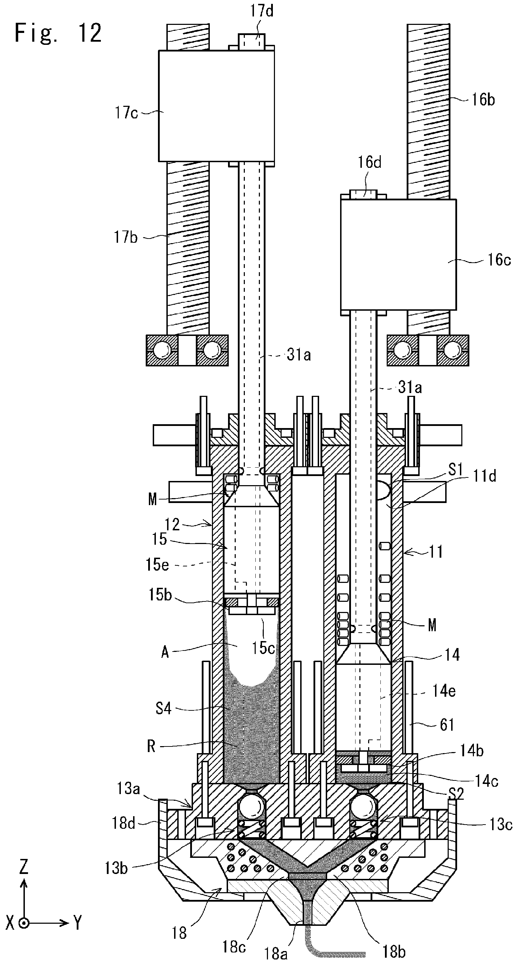

On the other hand, when the first controller 19 confirms that the second piston 15 has reached the farthest place of the Z-axis positive side as shown in Fig. 12 by referring to the results of the detection in the encoder 17f, the first controller 19 performs inversion control on the motor 17a in order to invert the second piston 15 from the movement toward the Z-axis positive side to the movement toward the Z-axis negative side. At this time, since there is a period during which the motor 17a is substantially stopped temporarily in order to invert the motor 17a, the second piston 15 is temporarily stopped in the farthest place of the Z-axis positive side.

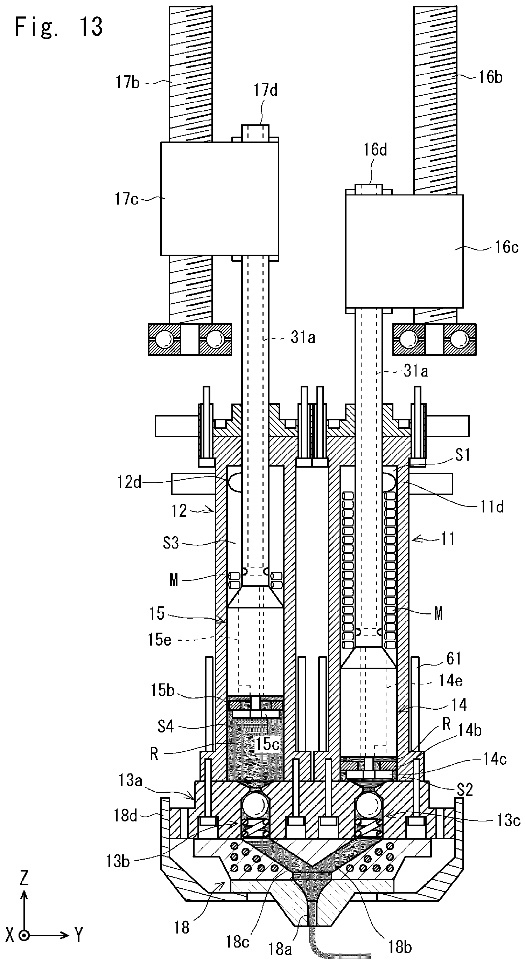

When the second piston 15 starts moving toward the Z-axis negative side, as shown in Fig. 13, the molten resin R is injected through the through-hole 13c on the Y-axis negative side and the second branch path 18c and the outlet 18a of the injection part 18 while pushing the non-return valve 13b of the end plate 13 on the Y-axis negative side toward the Z-axis negative side. At this time, the non-return valve 13b on the Y-axis positive side interrupts the flow of the molten resin R toward the Z-axis positive side by the pressure caused by the molten resin R. This state is shown as the first valley of the thin line in Fig. 17.

When the volume of the resin material M when it is supplied to the first space S3 of the second cylinder 12 is smaller than the volume of the second space S4, the gas A may enter the area of the second space S4 of the second cylinder 12 on the Z-axis positive side. However, this gas A escapes to the first space S3 via the exhaust notch groove 15h and the groove parts 15e of the second piston 15, and is further discharged via the exhaust path 31a of the rod 17d, and the exhaust hole 31b and the exhaust valve 31c of the case 17e. Accordingly, it is possible to prevent the gas A from being mixed into the molten resin R, whereby it is possible to prevent defects of workpieces.

By making the movement speed of the second piston 15 during a period in which the gas A that has entered the second space S4 of the second cylinder 12 is exhausted higher than the movement speed of the second piston 15 when the molten resin R of the target injection amount is injected, the molten resin R can be quickly injected.

Next, after the first controller 19 confirms that the first piston 14 has reached the farthest place of the Z-axis negative side by referring to the results of the detection in the encoder 16f, the first controller 19 controls and closes the exhaust valve 31c of the exhaust part 31. At the same time, the first controller 19 performs inversion control on the motor 16a in order to invert the first piston 14 from the movement toward the Z-axis negative side to the movement toward the Z-axis positive side. At this time, since there is a period during which the motor 16a is substantially stopped temporarily in order to invert the motor 16a, the first piston 14 substantially stops in the farthest place of the Z-axis negative side.

Accordingly, the period during which the molten resin R is injected from the second cylinder 12 overlaps the period during which the molten resin R is injected from the first cylinder 11 for a first preset period. It is therefore possible to cause the molten resin R to be continuously injected from the first cylinder 11 and the second cylinder 12. The first preset period can be set as appropriate in accordance with the movement speeds of the first piston 14 and the second piston 15.

At this time, the first controller 19 adjusts the movement speeds of the respective piston units 14 and 15 by controlling the motors 16a and 17a in such a way that the injection amount of the molten resin R injected from the injection part 18 becomes equal to a target injection amount, whereby it is possible to mold a desired workpiece with a high accuracy.

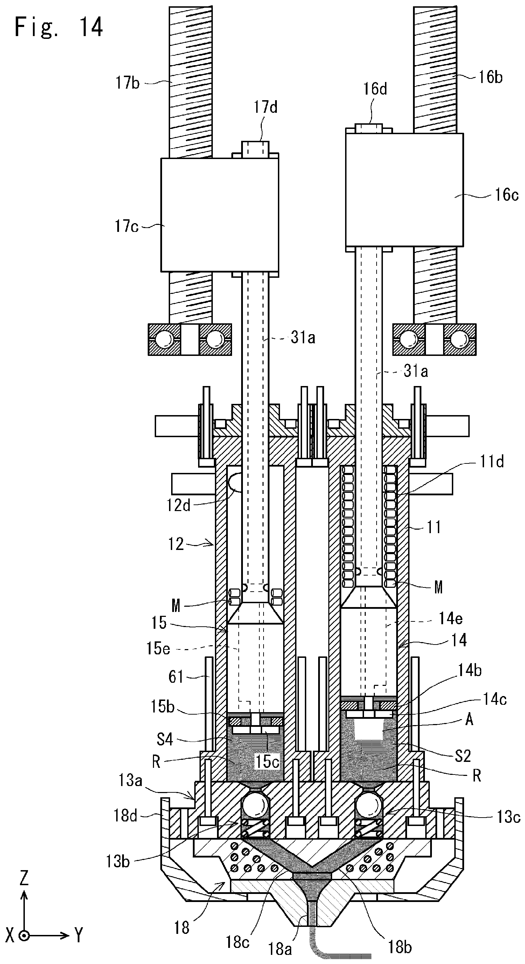

When the first piston 14 starts moving toward the Z-axis positive side, as shown in Fig. 14, the resin material M is plasticized while passing thorough the groove parts 14e of the first piston 14 to be a molten resin R, and this molten resin R flows into the first space S1 of the first cylinder 11. This state is shown as the second top of the thick line in Fig. 17.

On the other hand, after the first controller 19 confirms that the second piston 15 has reached a preset position in the Z-axis direction by referring to the results of the detection in the encoder 17f while moving the second piston 15 further toward the Z-axis negative side by controlling the motor 17a and injecting the molten resin R, the second controller 34 controls the exhaust valve 31c of the exhaust part 31 to cause the exhaust valve 31c to be opened.

Accordingly, the gas A in the first space S3 of the second cylinder 12 is discharged and depressurized, and the resin material M is supplied to the first space S3 of the second cylinder 12. This state is shown as the second valley of the broken line in Fig. 17.

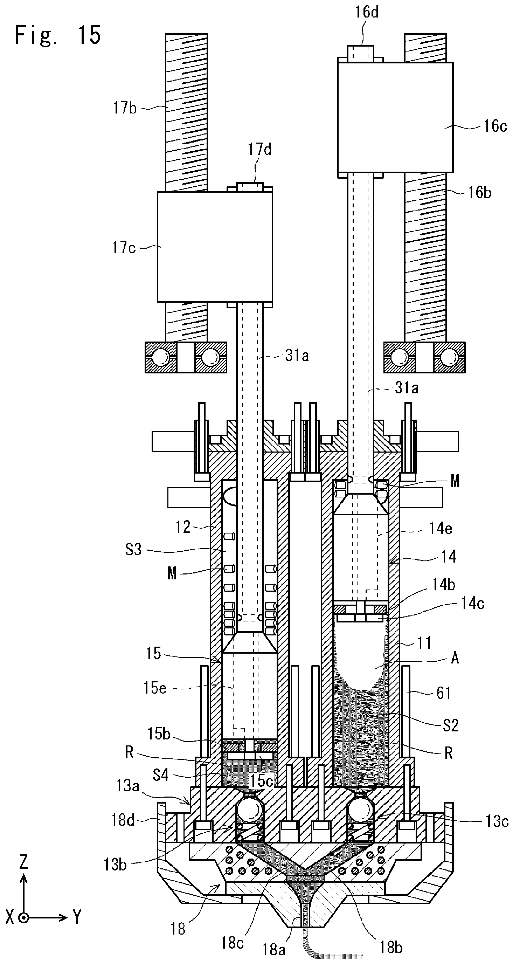

Next, as shown in Fig. 15, after the first controller 19 confirms that the first piston 14 has reached the farthest place of the Z-axis positive side by referring to the results of the detection in the encoder 16f, the first controller 19 performs inversion control on the motor 16a in order to invert the first piston 14 from the movement toward the Z-axis positive side to the movement toward the Z-axis negative side. At this time, since there is a period during which the motor 16a is substantially stopped temporarily in order to invert the motor 16a, the first piston 14 substantially stops in the farthest place of the Z-axis positive side.

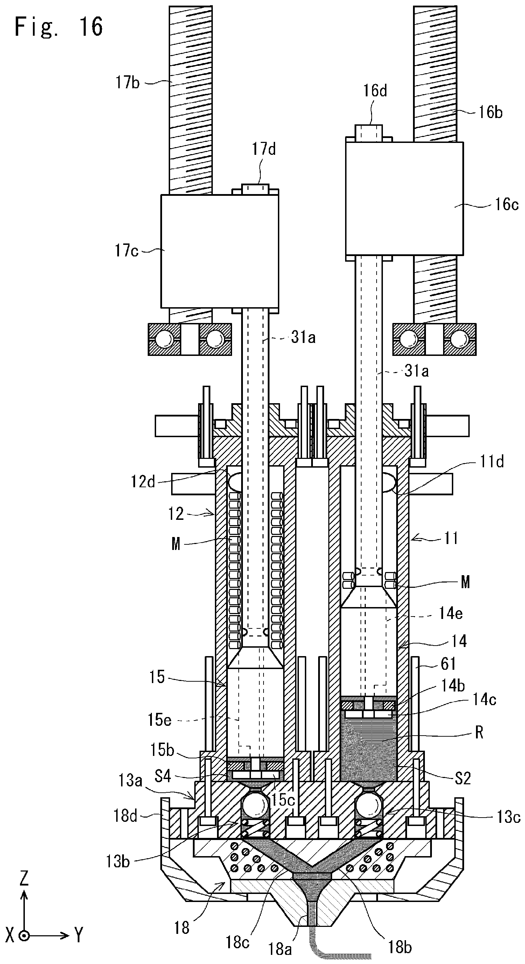

After the first piston 14 starts moving toward the Z-axis negative side, as shown in Fig. 16, the molten resin R is injected via the through-hole 13c on the Y-axis positive side and the first branch path 18b and the outlet 18a of the injection part 18 while pushing the non-return valve 13b of the end plate 13 on the Y-axis positive side toward the Z-axis negative side. At this time, the non-return valve 13b on the Y-axis negative side interrupts the flow of the molten resin R toward the Z-axis positive side by the pressure caused by the molten resin R. This state is shown as the second valley of the thick line in Fig. 17.

Next, after the first controller 19 confirms that the second piston 15 has reached the farthest place of the Z-axis negative side by referring to the results of the detection in the encoder 17f, the first controller 19 performs inversion control on the motor 17a in order to invert the second piston 15 from the movement toward the Z-axis negative side to the movement toward the Z-axis positive side.

At this time, since there is a period during which the motor 17a is substantially stopped temporarily in order to invert the motor 17a, the second piston 15 substantially stops in the farthest place of the Z-axis negative side. At the same time, the second controller 34 controls and closes the exhaust valve 31c of the exhaust part 31.

Accordingly, the period during which the molten resin R is injected from the first cylinder 11 also overlaps the period during which the molten resin R is injected from the second cylinder 12 for a first preset period. It is therefore possible to cause the molten resin R from being injected from the first cylinder 11 and the second cylinder 12.

When the second piston 15 starts moving toward the Z-axis positive side, the resin material M is plasticized while passing through the groove parts 15e of the second piston 15 to become a molten resin R, and this molten resin R flows into the first space S3 of the second cylinder 12. This state is shown as the second top of the thin line in Fig. 17.

On the other hand, when the first controller 19 confirms that the first piston 14 has reached a preset position in the Z-axis direction by referring to the results of the detection in the encoder 16f while moving the first piston 14 further toward the Z-axis negative side by controlling the motor 16a and injecting the molten resin R, the second controller 34 controls and opens the exhaust valve 31c of the exhaust part 31.

Accordingly, the gas A in the first space S1 of the first cylinder 11 is discharged and depressurized, and the resin material M is supplied to the first space S1 of the first cylinder 11. This state is shown as the third valley of the broken line in Fig. 17.

As described above, the third controller 53 controls the gantry device 51 and the lifting device 52 in such a way that a desired workpiece is additively manufactured on a surface of the table 4 on the Z-axis positive side by the injected molten resin R while continuously injecting the molten resin R from the first cylinder 11 and the second cylinder 12 by controlling, by the first controller 19, the motors 16a and 17a, whereby the workpiece can be molded.

At this time, the fourth controller 63 controls the first heating part 61 in such a way that the temperature of the injected molten resin R falls within a first preset range based on the results of the detection in the temperature detection part 62. Accordingly, it is possible to inject the molten resin R in a stable state.

In order to cause the molten resin R from being injected from continuously the first cylinder 11 and the second cylinder 12, the following two conditions need to be satisfied.
<Condition 1> T1_dw=T2_up+T2_rv1+T2_rv2
<Condition 2> T2_dw=T1_up+T1_rv1+T1_rv2

In the above expressions, T1_up denotes a period during which the first piston 14 moves toward the Z-axis positive side, T1_dw denotes a period during which the first piston 14 moves toward the Z-axis negative side, T1_rv1 denotes a period that is required for the first piston 14 to invert from the movement toward the Z-axis negative side to the movement toward the Z-axis positive side, and T1_rv2 denotes a period that is required for the first piston 14 to invert from the movement toward the Z-axis positive side to the movement toward the Z-axis negative side. Further, T2_up denotes a period during which the second piston 15 moves toward the Z-axis positive side, T2_dw denotes a period during which the second piston 15 moves toward the Z-axis negative side, T2_rv1 denotes a period that is required for the second piston 15 to invert from the movement toward the Z-axis negative side to the movement toward the Z-axis positive side, and T2_rv2 denotes a period that is required for the second piston 15 to invert from the movement toward the Z-axis positive side to the movement toward the Z-axis negative side.

By making the period during which the molten resin R is injected from the first cylinder 11 partially overlap the period during which the molten resin R is injected from the second cylinder 12 while satisfying the above conditions 1 and 2, the molten resin R can be continuously injected from the first cylinder 11 and the second cylinder 12.

As described above, the injection molding apparatus 1, the injection molding machine 2, and the injection molding method according to this embodiment make the period during which the molten resin R is injected from the first cylinder 11 partially overlap the period during which the molten resin R is injected from the second cylinder 12. It is therefore possible to cause the molten resin R from being continuously injected from the first cylinder 11 and the second cylinder 12.

Moreover, the injection molding apparatus 1, the injection molding machine 2, and the injection molding method according to this embodiment are able to automatically supply the resin material M to the first cylinder 11 and the second cylinder 12 by just controlling the exhaust valve 31c of the exhaust part 31. That is, the supply apparatus 3 according to this embodiment can serve as an automatic supply apparatus of the resin material M. Therefore, the resin material M can be supplied with a simple structure.

Further, the resin material M is supplied to the first cylinder 11 and the second cylinder 12 between the time when the first piston 14 and the second piston 15 reach predetermined positions in the Z-axis direction and the time when they reach the farthest place of the Z-axis negative side, whereby the resin material M can be quantitatively supplied to the first cylinder 11 and the second cylinder 12. Therefore, the measuring device of the resin material M may not be provided.

Note that the predetermined position in the Z-axis direction is preferably set in such a way that the first space S1 of the first cylinder 11 or the first space S3 of the second cylinder 12 is filled with the resin material M before the first piston 14 or the second piston 15 reaches the farthest place of the Z-axis negative side. Further, the position of the first piston 14 or the second piston 15 filled with the resin material M may be that before the first piston 14 or the second piston 15 reaches the farthest place of the Z-axis negative side.

Since the end part of the first cylinder 11 on the Z-axis negative side is opened, the first piston 14 and the rod 16d of the first drive part 16 can be inserted from the open port of the first cylinder 11 on the Z-axis negative side. Likewise, since the end part of the second cylinder 12 on the Z-axis negative side is opened, the second piston 15 and the rod 17d of the second drive part 17 can be inserted from the open port of the second cylinder 12 on the Z-axis negative side. Therefore, the plunger included in the injection molding apparatus disclosed in Japanese Unexamined Patent Application Publication No. 2017-132039 may not be provided.

The heating device 6 of the injection molding apparatus 1 according to this embodiment may further include a second heating part 64. The second heating part 64 may be formed of, for example, a heater wire, and may be buried in the second plate 18f of the injection part 18.

Accordingly, the fourth controller 63 controls the first heating part 61 or the second heating part 64, whereby the temperature of the molten resin R can be heated to a desired temperature. Therefore, the viscosity of the molten resin R injected from the outlet 18a of the injection part 18 can be reduced, whereby it is possible to easily control the injection of the molten resin R. As a result, it is possible to improve the interlaminar strength and to prevent shrinkage and warpage of a workpiece when the workpiece is molded.

As described above, the second plate 18f may be formed of a ceramic plate. Since the heat capacity of a ceramic plate is smaller than that of a metal, the heat of the second heating part 64 can be efficiently transferred to the molten resin R.

Further, when the second heating part 64 is damaged, it can be replaced by a new one via the second plate 18f in a simple manner by loosening the retaining nuts 18d. Further, when, for example, the first cylinder 11 and the second cylinder 12 are configured to be able to maintain the temperature of the molten resin R, the heating device 6 may not be provided.

Incidentally, as shown in Fig. 3, a cooling part 8 may be provided between the case 16e of the first drive part 16, and the first cylinder 11 and the second cylinder 12. The cooling part 8 has, for example, a ring shape as its basic form, and includes a through-hole 8a through which the rod 16d or 17d is made to pass so as to penetrate through the cooling part 8 in the Z-axis direction. Then, a cooling path 8b through which a cooling medium flows is formed in the cooling part 8 so as to surround the through-hole 8a.

According to the above structure, when the cooling medium is made to flow through the cooling path 8b of the cooling part 8 when a workpiece is molded in the injection molding apparatus 1, heat from the first cylinder 11 and the second cylinder 12 is not likely to be transferred to the bearing 16g of the first drive part 16 or the bearing 17g of the second drive part 17. Therefore, it is possible to prevent the temperatures of the bearings 16g and 17g from being changed and to thus prevent the bearings 16g and 17g from malfunctioning. As a result, the workpiece can be molded with a high accuracy.

### <Second Embodiment >

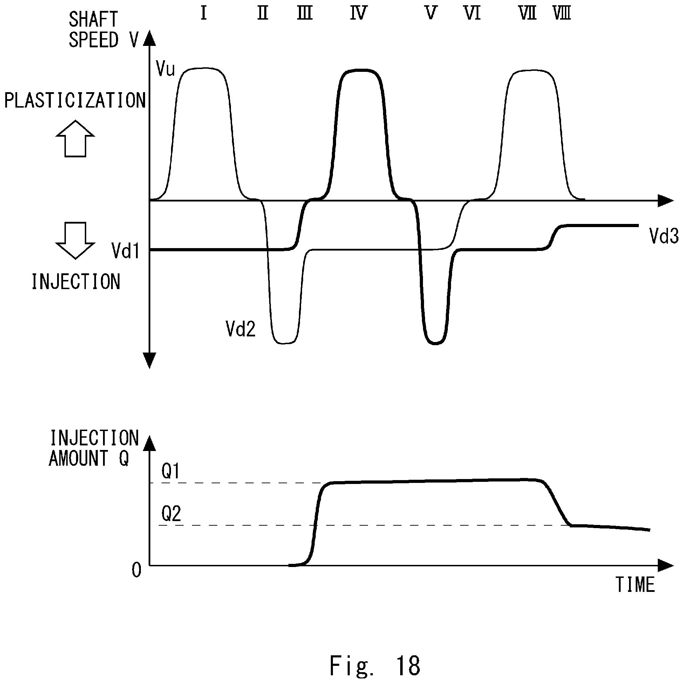

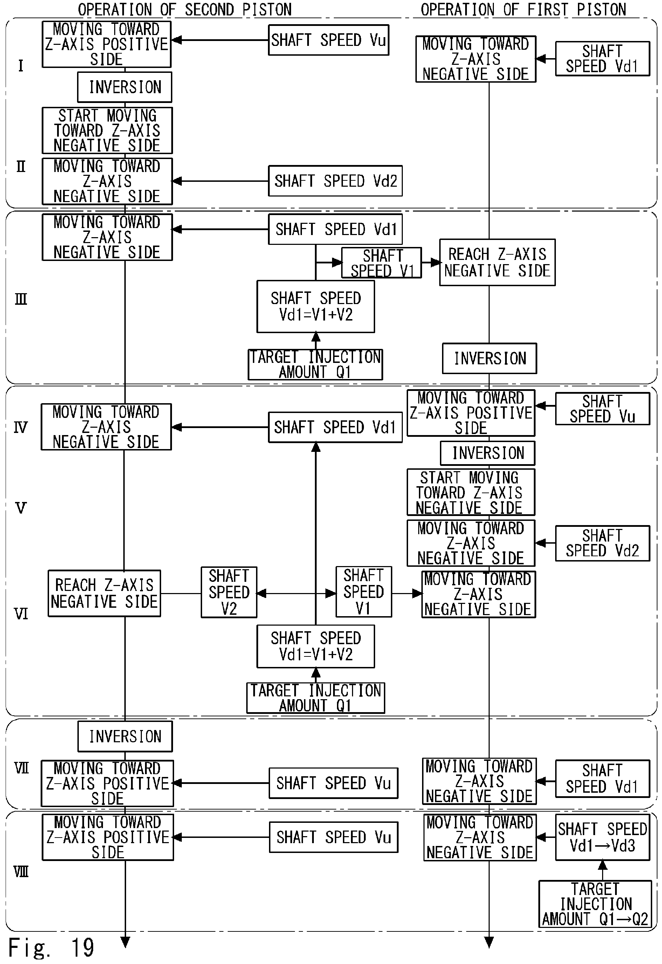

Fig. 18 is a diagram showing a relation among shaft speeds of a rod of a first drive part and a rod of a second drive part, time, and an injection amount of a molten resin. Fig. 19 is a diagram for describing operations of a first piston and a second piston.

In Fig. 18, the upper stage shows a relation between shaft speeds of the rod 16d of the first drive part 16 and the rod 17d of the second drive part 17 and time and the lower stage shows a relation between the injection amount of the molten resin R and time. In the upper stage shown in Fig. 18, the thick line shows the rod 16d of the first drive part 16 and the thin line shows the rod 17d of the second drive part 17.

As shown in Fig. 18, in this embodiment, the injection amount of the molten resin R is decreased from Q1 to Q2. First, as shown in the state I in Figs. 18 and 19, the first piston 14 is moved toward the Z-axis negative side while moving the rod 16d of the first drive part 16 at a shaft speed Vd1, thereby causing the molten resin R to be injected. On the other hand, the second piston 15 is moved toward the Z-axis positive side while moving the rod 17d of the second drive part 17 at a shaft speed Vu, thereby plasticizing the resin material M.

After that, the second piston 15 is inverted from the movement toward the Z-axis positive side to the movement toward the Z-axis negative side, and starts moving toward the Z-axis negative side. At this time, the gas A enters the area of the second space S4 of the second cylinder 12 on the Z-axis positive side. As shown in the state II in Figs. 18 and 19, in order to quickly discharge the gas A, the second piston 15 is moved toward the Z-axis negative side while moving the rod 17d of the second drive part 17 at a shaft speed Vd2 higher than the shaft speed Vd1.

Next, when, for example, the rod 17d of the second drive part 17 is moved at the shaft speed Vd2 for a second preset period and the gas A is discharged from the second space S4 of the second cylinder 12, as shown in the state III in Figs. 18 and 19, the shaft speed V2 of the rod 17d of the second drive part 17 is accelerated while the shaft speed V1 of the rod 16d of the first drive part 16 is decelerated in such a way that the total shaft speed of the rods 16d and 17d becomes equal to the shaft speed Vd1, in which the injection amount of the molten resin R becomes a target injection amount Q1, thereby causing the shaft speed V2 of the rod 17d of the second drive part 17 to reach Vd1.

As a result, the first piston 14 reaches the farthest place of the Z-axis negative side and the first piston 14 is inverted from the movement toward the Z-axis negative side to the movement toward the Z-axis positive side. Along with this, the second piston 15 moves toward the Z-axis negative side and the molten resin R of the target injection amount Q1 is injected. The second preset period may be set based on the results of measuring the period during which the gas A is discharged from the second space S4 of the second cylinder 12 in advance. Therefore, this period is an exhaust period.

Next, the first piston 14 is inverted from the movement toward the Z-axis positive side to the movement toward the Z-axis negative side, and as shown in the state IV in Figs. 18 and 19, the first piston 14 is moved toward the Z-axis positive side while the rod 16d of the first drive part 16 moves at the shaft speed Vu. Accordingly, the resin material M in the first cylinder 11 is plasticized to become a molten resin R.

After that, when the first piston 14 reaches the farthest place of the Z-axis positive side, the first piston 14 is inverted from the movement toward the Z-axis positive side to the movement toward the Z-axis negative side, and starts moving toward the Z-axis negative side. On the other hand, the second piston 15 moves toward the Z-axis negative side while the rod 17d of the second drive part 17 moves at the shaft speed Vd1, and the molten resin R of the target injection amount Q1 continues to be injected from the second cylinder 12.

Next, since the gas A enters the area of the second space S2 of the first cylinder 11 on the Z-axis positive side, as shown in the state V in Figs. 18 and 19, the first piston 14 is moved toward the Z-axis negative side while moving the rod 16d of the first drive part 16 at the shaft speed Vd2.

When, for example, the rod 16d of the first drive part 16 is moved at the shaft speed Vd2 for a second preset period, and the gas A is discharged from the second space S2 of the first cylinder 11, as shown in the state V1 in Figs. 18 and 19, the shaft speed V2 of the rod 17d of the second drive part 17 is decelerated while accelerating the shaft speed V1 of the rod 16d of the first drive part 16 in such a way that the total shaft speed of the rods 16d and 17d becomes equal to the shaft speed Vd1.

After that, when the second piston 15 reaches the farthest place of the Z-axis negative side, the second piston 15 is inverted from the movement toward the Z-axis negative side to the movement toward the Z-axis positive side, and as shown in the state VII in Figs. 18 and 19, the second piston 15 moves toward the Z-axis positive side while the rod 17d of the second drive part 17 moves at the shaft speed Vu. Accordingly, the resin material M in the second cylinder 12 is plasticized to become a molten resin R.

On the other hand, the first piston 14 moves toward the Z-axis negative side while the rod 16d of the first drive part 16 moves at the shaft speed Vd1. Accordingly, the molten resin R of the target injection amount Q1 is injected from the first cylinder 11. At this time, in this embodiment, as shown in the state VIII in Figs. 18 and 19, the target injection amount of the molten resin R from the injection part 18 can be reduced from Q1 to Q2.

Therefore, the rod 16d is moved by decelerating the shaft speed V1 of the rod 16d of the first drive part 16 to the shaft speed Vd3, in which the injection amount of the molten resin R becomes the target injection amount Q2. By changing the shaft speed of the rod 16d of the first drive part 16 and that of the rod 17d of the second drive part 17, the injection amount of the molten resin R can be changed in a simple manner.

In order to decrease the target injection amount of the molten resin R, the shaft speed of the rod 16d of the first drive part 16 or the rod 17d of the second drive part 17 is decelerated. Compared to a case in which the molten resin R of the target injection amount Q1 is injected, in a case in which the molten resin R of the target injection amount Q2 is injected, T1_dw, which is a period in which the first piston 14 moves toward the Z-axis negative side or T2_dw, which is a period in which the second piston 15 moves toward the Z-axis positive side, increases

Therefore, between the time when the first piston 14 or the second piston 15 reaches the farthest place of the Z-axis negative side and the time when inversion of the first piston 14 or the second piston 15 is started in order to plasticize the resin material M, a standby period is preferably provided in accordance with the target injection amount (that is, the shaft speed of the rod of another drive part).

When the standby period is provided between the time when the first piston 14 or the second piston 15 reaches the farthest place of the Z-axis negative side and the time when inversion of the first piston 14 or the second piston 15 is started, compared to a case in which the standby time is provided between the time when the first piston 14 or the second piston 15 reaches the farthest place of the Z-axis positive side and the time when inversion of the first piston 14 or the second piston 15 is started, it is possible to inject the molten resin R just after the resin material M is plasticized and to prevent the temperature of the molten resin R from being decreased.

While the target injection amount of the molten resin R is decreased from Q1 to Q2 in this embodiment, the target injection amount may instead be increased.

### <Third Embodiment>

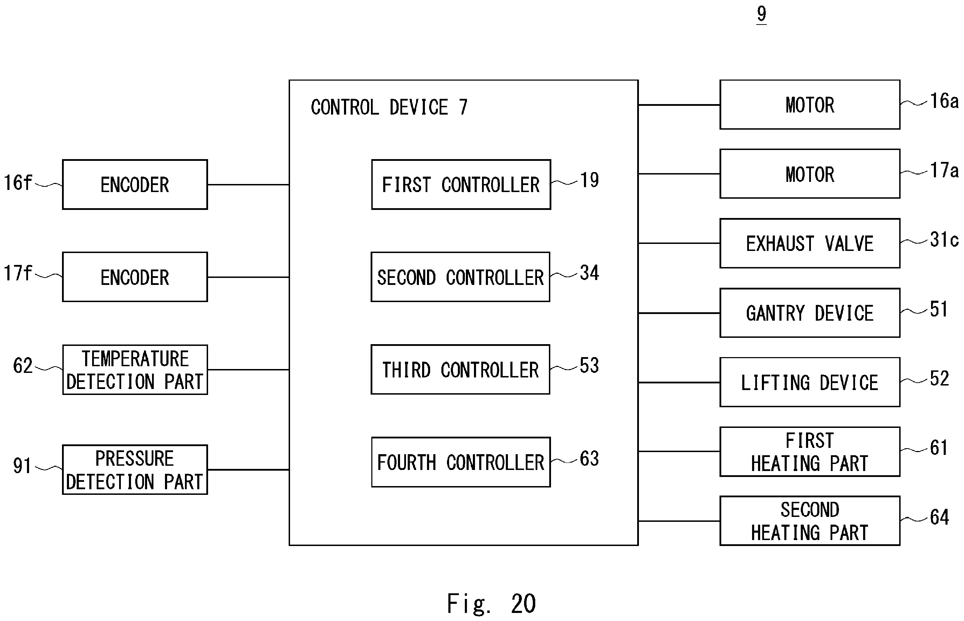

Fig. 20 is a block diagram of a control system of an injection molding apparatus according to this embodiment. While an injection molding apparatus 9 according to this embodiment has a structure substantially the same as that of the injection molding apparatus 1 according to the first embodiment, the injection molding apparatus 9 according to this embodiment includes a pressure detection part 91. Since the other structures of the injection molding apparatus 9 according to this embodiment are the same as those of the injection molding apparatus 1 according to the first embodiment, the redundant descriptions thereof will be omitted.

The pressure detection part 91, which is provided in the outlet 18a of the injection part 18, detects the injection pressure of the molten resin R and outputs the results of the detection to the fourth controller 63. The fourth controller 63 controls the first heating part 61 or the second heating part 64 in such a way that the injection pressure of the molten resin R falls within a second preset range based on the results of the detection. It is therefore possible to control the injection pressure of the molten resin R depending on the type of the molten resin R.

The present disclosure is not limited to the aforementioned embodiments and may be changed as appropriate without departing from the spirit of the present disclosure.

While the injection molding machine 2 according to the aforementioned embodiments includes the first cylinder 11 and the second cylinder 12, the number of cylinders may be any number as long as it is plural. In short, it is sufficient that the molten resin R can be continuously injected from the plurality of cylinders.

The structure of the supply apparatus 3 according to the aforementioned embodiments is merely one example, and it is sufficient that the resin material M be supplied to the first cylinder 11 and the second cylinder 12 in such a way that the molten resin R is continuously injected from the first cylinder 11 and the second cylinder 12.

The structure of the moving device 5 according to the aforementioned embodiments is merely one example, and it is sufficient that the moving device 5 have a structure capable of moving the table 4 or the injection molding machine 2 in such a way that a workpiece can be molded in the table 4.

While the present disclosure has been described as a hardware configuration in the aforementioned embodiments, the present disclosure is not limited thereto. The present disclosure may achieve desired processing by causing a Central Processing Unit (CPU) to execute a computer program.

The program can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), CD-Read Only Memory (ROM), CD-R, CD-R/W, and semiconductor memories (such as mask ROM, Programmable ROM (PROM), Erasable PROM (EPROM), flash ROM, Random Access Memory (RAM), etc.). Further, the program(s) may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. An injection molding machine (2) configured to inject a molten resin by causing a piston to be slid inside a cylinder, the injection molding machine (2) comprising:
a plurality of cylinders (11,12) configured to accommodate a molten resin (R);
a plurality of pistons (14,15) configured to be slid inside the respective cylinders (11,12) and extrude the molten resin (R) inside the respective cylinders (11,12);
a plurality of drive parts (16,17) configured to drive the respective pistons (11,12);
an injection part (18) configured to inject the molten resin (R) extruded from the plurality of cylinders (11,12); and
a controller (19) configured to control the plurality of drive parts (16,17),
wherein the controller (19) controls the plurality of drive parts (16,17) in such a way that a period during which the molten resin (R) is injected from at least a first cylinder (11) of the plurality of cylinders (11,12) overlaps a period during which the molten resin (R) is injected from a second cylinder (12) of the plurality of cylinders (11,12) for a preset period and the molten resin (R) is continuously injected from the plurality of cylinders (11,12).

2. The injection molding machine (2) according to Claim 1, wherein
the piston (14,15) is a torpedo piston having an outer circumferential surface on which a groove part (14e,15e) is formed,
the cylinder (11,12) includes a blocking part (11a,12a) that blocks an end part of the cylinder (11,12) which is on a side of the cylinder (11,12) opposite to the side of the cylinder (11,12) close to the injection part (18), a side wall part (11b,12b) that is continuous with the blocking part (11a,12a), and an open port that is formed in an end part of the cylinder (11,12) on the side of the cylinder (11,12) close to the injection part (18) and is covered with the injection part (18), and
in a state in which a resin material (M) is supplied to a space of the cylinder (11,12) which is on the side of the cylinder (11,12) opposite to the side of the cylinder (11,12) close to the injection part (18) with the piston (14,15) interposed therebetween, the piston (14,15) is slid toward the side of the cylinder (11,12) opposite to the side of the cylinder (11,12) close to the injection part (18) inside the cylinder (11,12), the resin material (M) is made to pass through the groove part (14e,15e) of the piston (14,15) while the resin material (M) is compressed in the space, and the resin material (M) is then plasticized to become a molten resin (R).

3. The injection molding machine (2) according to Claim 2, wherein an exhaust notch groove (14h,15h) is formed on a surface of the piston (14,15) on a side of the piston (14,15) close to the injection part (18) in such a way that the exhaust notch groove (14h,15h) is continuous with the groove part (14e,15e).

4. The injection molding machine (2) according to Claim 2 or 3, wherein
the cylinder (11,12) includes a supply hole (11d,12d) through which a resin material (M) is supplied to the space, and
the supply hole (11d,12d) is formed in a side wall part (11b,12b) of the cylinder (11,12).

5. An injection molding apparatus (1) comprising:
the injection molding machine (2) according to any one of Claims 1 to 4;
a supply part configured to supply a resin material (M) to a space of the cylinder (11,12) which is on a side of the cylinder (11,12) opposite to the side of the cylinder (11,12) close to the injection part (18) with the piston (14,15) interposed therebetween, wherein
the supply part comprises:
an exhaust part (31) configured to discharge gas from the space;
a hopper (32) that is connected to the space and accommodates the resin material (M); and
a pressurizing part (33) configured to pressurize inside the hopper (32), and
the resin material (M) is supplied to the space by pressurization inside the hopper (32) while gas is being discharged from the space via the exhaust part (31).

6. The injection molding apparatus (1) according to Claim 5, wherein
the drive part (16,17) comprises:
a motor (16a,17a);
a screw shaft (16b,17b) connected to the motor (16a,17a) in such a way that a drive force can be transmitted to the motor (16a, 17a);
a slider (16c,17c) that moves along the screw shaft (16b,17b);
a case (16e,17e) having a closed space that accommodates the screw shaft (16b,17b) and the slider (16c,17c), an end part of the cylinder (11,12) which is on a side of the cylinder (11,12) opposite to a side of the cylinder (11,12) close to the injection part (18) being fixed to the case (16e,17e); and
a rod (16d,17d) having one end part fixed to the piston (14,15) and another end part fixed to the slider (16c,17c) in a state in which the rod (16d,17d) is made to pass through the case (16e,17e) and the cylinder (11,12),
the exhaust part (31) comprises:
an exhaust path (31a) that passes inside the rod (16d,17d) and is extended in a direction in which the rod (16d,17d) is extended;
an exhaust hole (31b) that is formed in the case (16e,17e); and
an exhaust valve (31c) that is connected to the exhaust hole (31b);
one end part of the exhaust path (31a) reaches one end part of the rod (16d,17d) and is arranged inside the case (16e,17e), and another end part of the exhaust path (31a) reaches the other end part of the rod (16d,17d) and is arranged in the space, and
the supply part supplies the resin material (M) to the space by opening the exhaust valve (31c) and causing the pressure inside the case (16e,17e) and the space to be decreased.

7. The injection molding apparatus according to Claim 5 or 6, comprising:
a heating part that is arranged in the injection part (18); and
a detection part (62) configured to detect the temperature of the molten resin (R),
wherein the controller (63) controls the heating part in such a way that the temperature of the molten resin (R) falls within a preset range.

8. The injection molding apparatus according to any one of Claims 5 to 7, wherein
an end part of the cylinder (11,12) which is on a side of the cylinder (11,12) opposite to the side of the cylinder (11,12) close to the injection part (18) is fixed to the drive part (16,17), and
a cooling part (8) is arranged between the drive part (16,17) and the cylinder (11,12).

9. An injection molding method for injecting a molten resin (R) by causing a piston (14,15) to be slid inside a cylinder (11,12), the method comprising:
causing respective pistons (14,15) to be slid inside a plurality of respective cylinders (11,12), causing a period during which a molten resin (R) is injected from at least a first cylinder (11) of the plurality of cylinders (11,12) to overlap a period during which a molten resin (R) is injected from a second cylinder (12) of the plurality of cylinders (11,12) for a first preset period, and causing the molten resin (R) to be continuously injected from the plurality of cylinders (11,12).

10. The injection molding method according to Claim 9, comprising:
causing the piston (14,15) to be slid in one direction using a torpedo piston as the piston (14,15), thereby plasticizing a resin material (M) to obtain a molten resin (R), and causing the piston (14,15) to be slid in another direction, thereby injecting the molten resin (R); and
causing, in each of the cylinders (11,12), a period for injecting the molten resin to overlap a period for supplying the resin material (M) to the cylinder (11,12) for a second preset period.

11. The injection molding method according to Claim 10, wherein a standby period is set between the time when the injection of the molten resin (R) is ended and the time when the plasticization of the resin material (M) is started, the standby period being set in accordance with a target injection amount of the molten resin (R).

12. The injection molding method according to any one of Claims 9 to 11, wherein an exhaust period for exhausting gas that enters a space between the molten resin (R) and the piston (14,15) is set before the injection of the molten resin (R) is started.

13. An injection molding program configured to inject a molten resin (R) by causing a piston (14,15) to be slid inside a cylinder (11,12),
wherein the program causes a computer to execute processing for controlling a plurality of drive parts (16,17) that drive respective pistons (14,15) so as to cause the respective pistons (14,15) to be slid inside a plurality of respective cylinders (11,12), cause a period during which a molten resin (R) is injected from at least a first cylinder (11) of the plurality of cylinders (11,12) to overlap a period during which a molten resin (R) is injected from a second cylinder (12) of the plurality of cylinders (11,12) for a preset period, and continuously inject the molten resin (R) from the plurality of cylinders (11,12).
